# EUROPÄISCHE PATENTANMELDUNG

(11) **EP 0 840 049 A2**
(43) Veröffentlichungstag der Anmeldung: **06.05.1998**
(21) Anmeldenummer: 97119001.2
(22) Anmeldetag: 31.10.1997
(51) Int. Cl.: F16L 23/024, F16L 23/028

(54) **Bundbuchse**

(30) Priorität: 01.11.1996 CH 2698/96
(71) Anmelder: Georg Fischer Rohrleitungssysteme AG, CH-8201 Schaffhausen (CH)
(72) Erfinder: Mayer, Karl-Heinz, 78224 Singen (DE)

(57) **Zusammenfassung**

Bei einer Bundbuchse (14) mit einer Anschlagfläche (28) für einen Ringflansch (16) zur Herstellung einer Flanschverbindung von Rohrteilen (12) weist die Anschlagfläche (28) zu einer bezüglich der Bundbuchsenachse (x) senkrecht stehenden Ebene (E) eine vom Ringflansch (16) wegweisende Anschrägung (36) auf.

Durch die Anschrägung reduzieren sich die auf die Bundbuchse einwirkenden Biegemomente infolge hoher Innendrucke sowie übermässiger Schraubenanzugsmomente, wodurch die Riss- und Bruchanfälligkeit der Bundbuchse drastisch vermindert wird.

## Beschreibung

Die Erfindung betrifft eine Bundbuchse mit einer Aschlagfläche für einen Ringflansch zur Herstellung einer Flanschverbindung von Rohrteilen.

Flanschverbindungen mit Bundbuchsen werden vor allem für die Verbindung grossdimensionierter Rohre mit einem Durchmesser bis zu 400 mm eingesetzt. Weit verbreitet sind vor allem PVC-Kunststoffrohre, auf deren miteinander zu verbindenden Rohrenden jeweils eine ebenfalls aus PVC gefertigte und üblicherweise mit dem Rohrende verklebte Bundbuchse aufgesetzt ist. Eine fluiddichte und mechanisch stabile Verbindung von zwei aneinanderliegenden Bundbuchsen mit zwischengeordneter Dichtung erfolgt über Flansche, die miteinander verschraubt werden und dadurch den für die fluiddichte Verbindung erforderlichen Anpressdruck der Bundbuchsendichtflächen auf die zwischenliegende Dichtung erzeugen. Als Werkstoff für die Flansche werden z.B. Polyesterharze, PVC-U oder Stahl eingesetzt

Durch unsachgemässes Anziehen der Schrauben oder auch bei hohen Innendrucken in den Rohren werden die Bundbuchsen im Bereich der Kontaktfläche zum Flansch hohen örtlichen Belastungen ausgesetzt. Die dabei auftretenden hohen Biegemomente erzeugen eine Kerbwirkung, die zunächst zu Anrissen und bei fortgesetzter Belastung schliesslich zum Bruch der Bundbuchse führen können.

Angesichts dieser Gegebenheiten stellt sich die Aufgabe, eine Bundbuchse der eingangs genannten Art derart weiterzubilden, dass sie selbst bei hoher Innendruckbelastung und übermässigen Schraubenanzugsmomenten eine im Vergleich zu herkömmlichen Bundbuchsen verminderte Riss- und Bruchanfälligkeit aufweist.

Zur erfindungsgemässen Lösung der Aufgabe führt, dass die Anschlagfläche zu einer bezüglich der Bundbuchsenachse senkrecht stehende Ebene eine vom Ringflansch wegweisende Anschrägung aufweist.

Durch diese Massnahme kann der bei Ueberbelastung sich verformende Ringflansch in den durch die Anschrägung geschaffenen Freiraum ausweichen, so dass geringere Biegemomente auf die Bundbuchse übertragen werden. Wodurch vor allem die für die Risseinleitung und -Fortschreitung verantwortliche Kerbwirkung vermindert wird.

In der Praxis liegt der Winkel zwischen der Anschrägung und der vorstehend definierten senkrechten Ebene bevorzugt zwischen 1 und 40°, insbesondere zwischen etwa 5 bis 35°. Hierbei kann sich die Anschrägung grundsätzlich über die gesamte Breite der Anschlagfläche erstrecken. Bei einer zweckmässigen Ausgestaltung der Anschlagfläche kann diese auch einen inneren, in der senkrechten Ebene liegenden Flächenbereich aufweisen, an die sich die Anschrägung als äusserer Flächenbereich anschliesst. Hierbei entspricht die Breite des inneren Flächenbereichs bevorzugt maximal etwa 90% der Breite der Anschlagfläche, mit einem Vorzugsbereich zwischen etwa 10 und 70%.

Die erfindungsgemäss als Anschrägung ausgestaltete Anschlagfläche ist grundsätzlich unabhängig vom Werkstoff auf alle Arten von Bundbuchsen anwendbar. Die erfindungsgemässen Bundbuchsen werden jedoch bevorzugt in Kunststoffausfürung verwendet und sind insbesondere aus PVC-U, PVC-C oder ABS gefertigt.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- - Fig. 1: einen Längsschnitt durch eine Flanschverbindung mit Bundbuchsen;
- - Fig. 2: einen Längsschnitt durch einen Teil einer Bundbuchse.

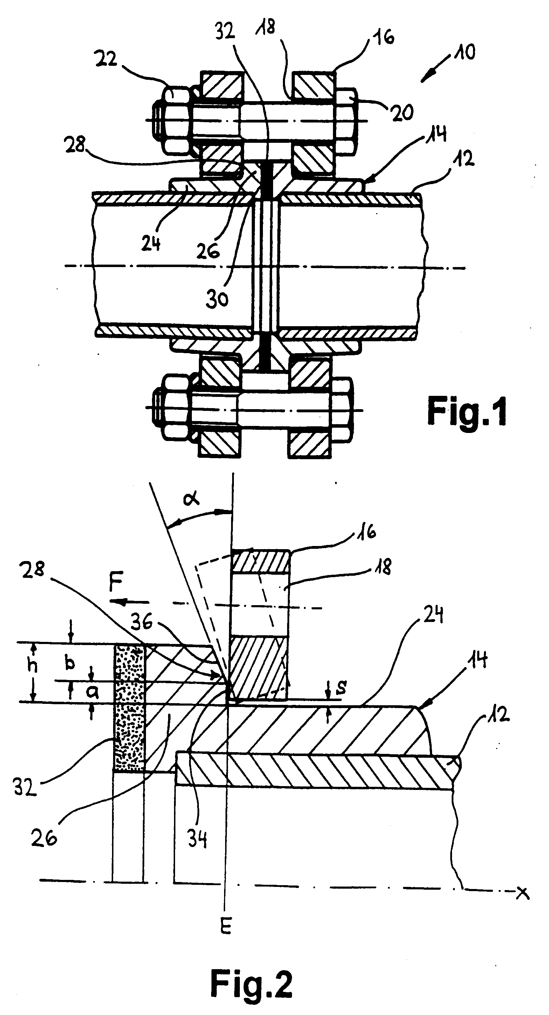

Bei einer in Fig. 1 dargestellten Flanschverbindung 10 sind auf die stirnseitigen Enden von zwei miteinander zu verbindenden Rohrteilen 12 Bundbuchsen 14 aufgesetzt. Die Verbindung der beiden Rohrteile 12 erfolgt über Ringflansche 16, die mit den Bundbuchsen in Anschlag stehen und über randständige Bohrungen 18 mittels Schraubenbolzen 20 und Muttern 22 kraftschlüssig miteinander verbunden sind.

Die Bundbuchsen 14 weisen einen zylinderförmigen Aufnahmeteil 24 zur Aufnahme der Rohrteile 12 sowie einen Flanschteil 26 auf. Die gegen die jeweils gegenüberstehende Bundbuchse gerichtete Seite des Flanschteils 26 ist als Dichtfläche 30 ausgestaltet. Die Anordnung einer Flachdichtung 32 zwischen den beiden Dichtflächen 30 der einander gegenüberstehenden Bundbuchsen 14 führt zu einer fluiddichten Verbindung der beiden Rohrteile 12.

Die der Dichtfläche 30 abgewandte Seite des Flanschteils 26 bildet eine ringförmige Anschlagfläche 28 für den mit einem Spiel s von beispielsweise 0,5 bis 1 mm auf dem Rohraufnahmeteil 24 der Bundbuchse 14 sitzenden Ringflansch 16.

Die ringförmige Anschlagfläche 28 mit einer Gesamtbreite h weist einen ersten, inneren Flächenbereich einer Breite a sowie einen zweiten, äusseren Flächenbereich einer Breite b auf. Der senkrecht zur Bundbuchsenachse x stehende erste Flächenbereich 34 bildet die eigentliche Anschlagfläche für den Ringflansch 16. Der zweite Flächenbereich 36 ist als Anschrägung ausgestaltet und weicht gegenüber der Senkrechten zur Bundbuchsenachse x um einen Winkel α von beispielsweise 30° ab.

Wie in Fig. 2 gestrichelt gezeichnet, kann sich der Ringflansch 16 bei hoher Innendruckbelastung und/oder bei zu hohem Schraubenanzugsmoment durch Einwirkung einer über die Schraubenbolzen 20 übertragenen Kraft verbiegen. Der durch den äusseren Flächenbereich bzw. die Anschrägung 36 geschaffene Freiraum 38 ermöglicht eine verhältnissmässig starke Durchbiegung des Ringflansches 16, ohne dass hierdurch ein grosses Biegemoment auf den Flanschteil 26 der Bundbuchse 14 übertragen wird.

## Patentansprüche

1. Bundbuchse mit einer Anschlagfläche (28) für einen, Ringflansch (16) zur Herstellung einer Flanschverbindung von Rohrteilen (12) dadurch gekennzeichnet, dass die Anschlagfläche (28) zu einer bezüglich der Bundbuchsenachse (x) senkrecht stehenden Ebene (E) eine vom Ringflansch (16) wegweisende Anschrägung (36) aufweist.

2. Bundbuchse nach Anspruch 1, dadurch gekennzeichnet, dass die Anschrägung (36) mit der senkrechten Ebene (E) einen Winkel (α) von 1 bis 40°, insbesondere 5 bis 35°, einschliesst.

3. Bundbuchse nach Anspruch 1 oder 2, dadurch gekennzeichnet, dass sich die Anschrägung (36) über die gesamte Breite (h) der Anschlagfläche (28) erstreckt.

4. Bundbuchse nach Anspruch 1 oder 2, dadurch gekennzeichnet, dass die Anschlagfläche (28) einen inneren, in der senkrechten Ebene (E) liegenden Flächenbereich (34) aufweist, an die sich die Anschrägung (36) als äusserer Flächenbereich anschliesst.

5. Bundbuchse nach Anspruch 4, dadurch gekennzeichnet, dass die Breite (a) des inneren Flächenbereiches (34) maximal 90%, vorzugsweise 10 bis 70%, der Breite (h) der Anschlagfläche (28) entspricht.

6. Bundbuchse nach einem der Ansprüche 1 bis 5, dadurch gekennzeichnet, dass sie aus Kunststoff, insbesondere aus PVC-C, PVC-U oder ABS, gefertigt ist.
